# EUROPÄISCHE PATENTSCHRIFT

(11) **EP 2 107 718 B1**
(45) Veröffentlichungstag und Bekanntmachung des Hinweises auf die Patenterteilung: **05.03.2014**
(21) Anmeldenummer: 09155537.5
(22) Anmeldetag: 18.03.2009
(51) Int. Cl.: H04L 12/24, H04L 12/26, H04L 29/08, H04W 4/14, G01S 1/00, G01S 5/00

(54) **Verfahren zur Konfiguration einer Geräteelektronik eines handgeführten Arbeitsgeräts**
Method for configuring the electronic equipment of a handheld implement
Procédé de configuration d'un appareil électronique d'un appareil de travail manuel

(30) Priorität: 03.04.2008 DE 102008000980
(43) Veröffentlichungstag der Anmeldung: 07.10.2009
(73) Patentinhaber: HILTI Aktiengesellschaft, 9494 Schaan (LI)
(72) Erfinder: Gerold, Uwe, 88131, Lindau (DE); Keck, Joachim, Eschen, 9492 (LI); Welte, Norbert, Klaus, 6833 (AT)

(56) Entgegenhaltungen:
- WO-A1-03/028389
- WO-A1-2007/033868
- US-A1- 2006 100 002

## Beschreibung

Die vorliegende Erfindung betrifft ein Verfahren zur Konfiguration einer Datenübertragungseinrichtung eines handgeführten Arbeitsgeräts, der in Patentanspruch 1 genannten Art. Die handgeführten Arbeitsgeräte können z. B. als Eintreibgeräte ausgebildet sein, die elektrisch oder mit festen, gasförmigen oder flüssigen Brennstoffen oder auch mit Druck- oder Pressluft betrieben werden. Derartige handgeführte Arbeitsgeräte können aber auch als drehende oder zumindest teilweise schlagende Handwerkzeugmaschinen ausgebildet sein, wie z. B. als Schlagbohrmaschinen oder als Meisselgerät. Weitere Beispiele solcher Geräte sind Bohrmaschinen, Bohrhämmer, Abbauhämmer, Schraubgeräte, Schleif-, Kreiss-, Ketten- und Stichsägen. Die Datenübertragungseinrichtung ist dabei entweder im Arbeitsgerät selbst angeordnet oder in einem Behältnis des Arbeitsgerätes, wie z. B. einem Werkzeugkoffer.

Bei modernen handgeführten Arbeitsgeräten ist es wünschenswert Gerätefunktionen und Betriebszustände zu überwachen und nachzuverfolgen um z. B. ggf. auftretende Fehlfunktionen oder Betriebsstörungen möglichst frühzeitig - idealerweise vor ihrem Auftreten zu erkennen und Gegenmassnahmen einzuleiten.

WO 03/028389 A1 offenbart ein System und Verfahren zur drahtlosen Kommunikation zwischen einem Ferngerät und einer Schweißanlage, die eine WAP-Client-Komponente und eine drahtlose Kommunikationskomponente enthält.

Aus der US 6 123 241 ist ein als Setzgerät ausgebildetes handgeführtes Arbeitsgerät mit einem Kontrollsystem bekannt, über welches dem Anwender mitgeteilt werden kann, wenn an dem Eintreibgerät eine Wartung oder Unterhaltungs-Reparaturen durchgeführt werden müssen. Das Kontrollsystem weist zu diesem Zweck einen Mikroprozessor auf, der Eingangsdaten von verschiedenen Sensoren erhält. So wird z. B. der Brennstoffdruck über einen Drucksensor überwacht. Über eine entsprechende Schnittstelle bzw. Datenübertragungseinrichtung können Daten vom Kontrollsystem auf einen Personalcomputer heruntergeladen werden. Ebenso können Dateneingabe-Signale von einem Personalcomputer oder einem User-Interface hochgeladen werden.

Von Nachteil hierbei ist, dass das Arbeitsgerät nur eine manuell gesteuerte Datenübertragung zulässt, wenn das Arbeitsgerät sich in unmittelbarer Umgebung eines Personalcomputers befindet.

Die Aufgabe der vorliegenden Erfindung liegt darin, die genannten Nachteile zu vermeiden.

Diese Aufgabe wird durch ein Verfahren zur Konfiguration einer Geräteelektronik eines handgeführten Arbeitsgeräts nach Anspruch 1 gelöst. Demnach weist die Geräteelektronik Sensormittel zur Erfassung von Messdaten, eine Steuereinheit zur Messdatenverarbeitung und zur Steuerung von Gerätefunktionen und eine Datenübertragungseinrichtung auf wobei eine Datenübertragung zwischen der Datenübertragungseinrichtung und einer Auswertestelle über ein Mobilfunknetz erfolgt und wobei
- in einem ersten Schritt wenigstens die Steuereinheit und die Datenübertragungseinrichtung der Geräteelektronik zu einem in einem Steuerprogramm als Zeitparameter hinterlegten Zeitpunkt aus einem Ruhemodus geweckt und aktiviert werden,
- die Datenübertragungseinrichtung in einem nachfolgenden zweiten Schritt in eine drahtlose, digitale Datenkommunikation mit dem Mobilfunknetz tritt und über das Mobilfunknetz eine von einer Auswertestelle bereitgestellte Konfigurationsdatei abruft,
- die Datenübertragungseinrichtung in einem nachfolgenden dritten Schritt über das Mobilfunknetz eine Antwort empfängt, die eine neue Konfigurationsdatei enthalten kann,
- die Datenübertragungseinrichtung und/oder die Steuereinheit in einem nachfolgenden vierten Schritt überprüft ob eine Konfigurationsdatei empfangen wurde und die in dem Fall, dass eine Konfigurationsdatei empfangen wurde, in der Konfigurationsdatei enthaltene Parameter in das Steuerprogramm für die Datenübertragungseinrichtung implementiert
- und die Datenübertragungseinrichtung und die Steuereinheit in einem nachfolgenden weiteren Schritt wieder in den Ruhemodus überführt werden.

Mit diesem Verfahren kann ortsunabhängig - quasi von jedem Punkt der Erde aus - eine Datenübermittlung von dem Arbeitsgerät zu einer Auswertestelle erfolgen, wobei die Steuerung der Datenübertragungseinrichtung mittels der Konfigurationsdatei über die Auswertestelle erfolgt.

Vorteilhaft erfolgt die Datenübertragung zwischen der Auswertestelle und der Datenübertragungseinrichtung indirekt über SMS ("Short Message Service"), wodurch eine einfache und sichere Datenübermittlung gewährleistet wird, die unabhängig von einer Empfangsbereitschaft der jeweiligen Gegenstelle ist, da die SMS auf einem Server des Mobilfunknetzes hinterlegt werden kann, bis sie abgerufen wird. Zur Übertragung grösserer Datenmengen können mehrere SMS miteinander verknüpft werden.

Günstig ist es auch, wenn die Datenübertragung zwischen der Auswertestelle und der Datenübertragungseinrichtung direkt über eine vom Mobilfunknetz vermittelte Verbindung zwischen der Datenübertragungseinrichtung und der Auswertestelle erfolgt. Hierdurch kann alternativ zur Datenübermittlung mittels SMS ein direkter Datenverkehr über eine Mobilfunkverbindung zwischen der Auswertestelle und der Datenübertragungseinrichtung erfolgen. Durch den Direktendatenverkehr können zum einen grössere Datenmengen in kürzerer Zeit übertragen werden und zum anderen ist sichergestellt, dass die Daten nicht nur übertragen sondern auch empfangen werden. Ferner ist diese Art der Datenübertragung zeitnah.

Vorteilhaft nimmt die Datenübertragungseinrichtung in einem fünften Schritt, der zwischen dem vierten Schritt und dem weiteren Schritt liegt, eine Datenübertragung wenigstens von Messdaten aus der Steuereinheit über das Mobilfunknetz an die Auswertestelle vor. Die Kommunikation zwischen der Datenübertragungseinrichtung und der Auswertestelle ist demnach bidirektional, so dass eine bestehende Verbindung neben der Übermittlung der Konfigurationsdatei von der Auswertestelle zur Datenübertragungseinrichtung des Arbeitsgeräts gleichzeitig auch zur Übermittlung von Daten von dem Arbeitsgerät an die Auswertestelle genutzt werden kann.

Von Vorteil ist ferner, wenn neben den Steuerparametern noch Steuerprogramme und/oder Steuerprogrammteile mit der Konfigurationsdatei von der Auswertestelle an die Datenübertragungseinrichtung übermittelbar sind, wodurch auf einfache Weise Anpassungen und/oder Upgrades des Steuerprogramms möglich sind.

Vorteilhaft ist neben der Datenübertragungseinrichtung eine Positionsermittlungseinrichtung zur globalen Positionsermittlung vorgesehen, wobei die von der Positionsermittlungseinrichtung ermittelten Positionsdaten von der Datenübertragungseinrichtung bei der Datenübertragung an die Auswertestelle mit übermittelt werden. Durch diese Massnahme können die mittels der Datenübertragungseinrichtung zu versendenden Daten um eine Positionsangabe zum derzeitigen Standort des Arbeitsgeräts ergänzt werden, was insbesondere beim Diebstahlschutz von Vorteil ist. Ferner können bestimmte Daten, wie z. B. Umgebungstemperaturdaten, in Relation zur Lage und zur Geografie des Einsatzgebietes des Arbeitsgeräts gestellt werden.

In den Zeichnungen ist die Erfindung in einem Ausführungsbeispiel dargestellt.

### Es zeigen:

- Fig. 1: ein erfindungsgemässes, als Eintreibgerät ausgebildetes handgeführtes Arbeitsgerät im teilweisen Längsschnitt,
- Fig. 2: ein Detail des handgeführten Arbeitsgeräts aus Fig. 1,
- Fig. 3: ein Funktionsdiagramm,
- Fig. 4: ein Flussdiagramm zum Ablauf des erfindungsgemässen Verfahrens.

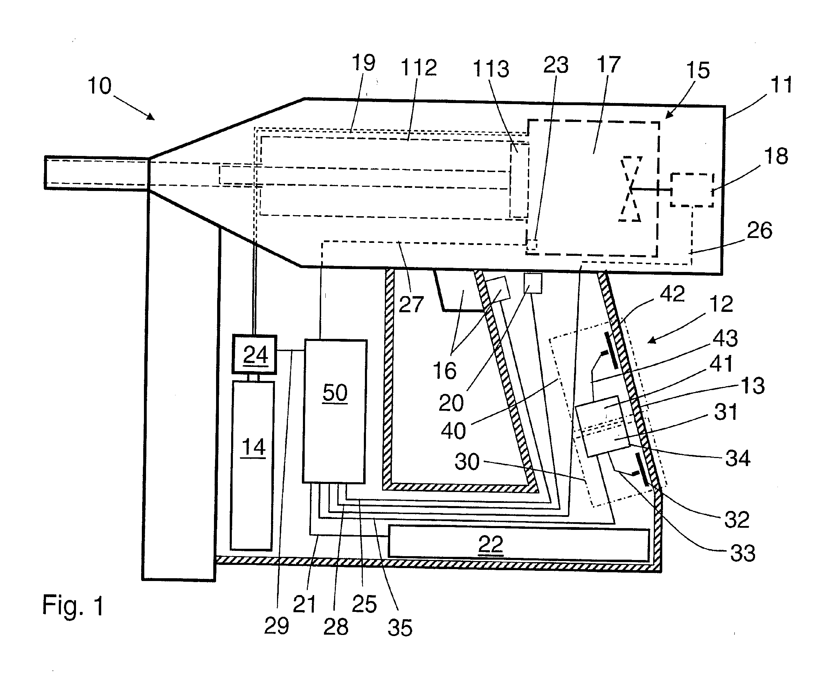

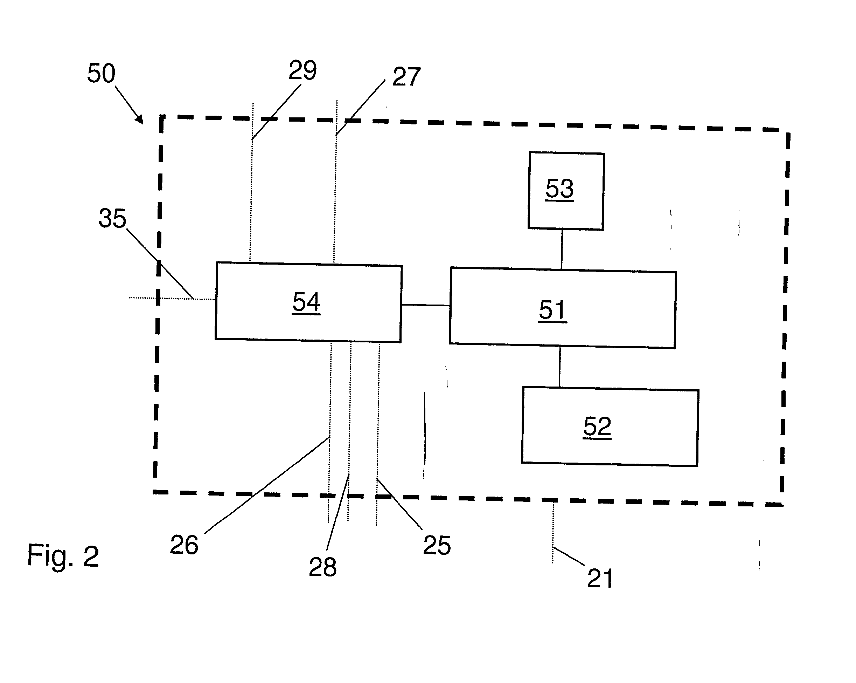

In den Fig. 1 und 2 ist ein erfindungsgemässes handgeführtes Arbeitsgerät 10 in Form eines brennkraftbetriebenen Setzgerätes dargestellt. Das Arbeitsgerät 10 verfügt über ein allgemein mit 11 bezeichnetes ein- oder mehrteiliges Gehäuse, in dem ein Antrieb 15 angeordnet ist. Über den Antrieb 15 kann ein Befestigungselement, wie ein Nagel, Bolzen, etc. in ein Werkstück eingetrieben werden. Die Befestigungselemente können z. B. in einem Magazin am Arbeitsgerät 10 bevorratet sein.

Zum Antrieb gehören u. a. eine Brennkammer 17 und ein Führungszylinder 112, in dem ein Setzkolben 113 axial versetzbar angeordnet ist. Wie aus Fig. 1 ferner ersichtlich ist, ist an einem Griffbereich 12 des Arbeitsgeräts 10 ein Auslöseschalter 16 angeordnet, über den eine Zündeinrichtung 23 in der Brennkammer 17, wie z. B. eine Zündkerze, auslösbar ist, wenn das Arbeitsgerät 10 an ein Werkstück angepresst worden ist. Zusätzlich zu dem vorhergehend erwähnten Auslöseschalter 16 können noch weitere Schalter, wie z. B. Anpressschalter, Brennkammerschalter oder Magazinschalter, vorgesehen sein.

Das in dem vorliegenden Ausführungsbeispiel als Setzgerät ausgebildete Arbeitsgerät 10 kann mit einem Brenngas oder mit einem verdampfbaren Flüssigbrennstoff betrieben werden, das in einem in Figur 1 dargestellten Brennstoffreservoir 14, wie z. B. einer Brennstoffdose, bereitgestellt wird. Von dem Brennstoffreservoir 14 geht eine Brennstoffleitung 19 ab die zur Brennkammer 17 führt. In der Brennstoffleitung 19 ist eine Dosiereinrichtung 24 zwischengeschaltet, über die die Brennstoffmenge, die für einen jeweiligen Setzvorgang benötigt wird dosierbar ist.

Ein in der Brennkammer 17 angeordneter und über einen Ventilatormotor 18 antreibbarer Ventilator dient sowohl der Erzeugung eines turbulenten Strömungsregimes eines in der geschlossenen Brennkammer 17 befindlichen Oxidationsmittel-Brennstoffgemisches als auch dem Ausspülen der geöffneten Brennkammer 17 mit Frischluft nach erfolgtem Setzvorgang.

Die Versorgung der elektrischen Verbraucher, wie z. B. der Zündeinrichtung 23 und des Ventilatormotors 18, des Arbeitsgeräts 10 mit elektrischer Energie ist über eine elektrische Energiequelle 22 in Form wenigstens eines Akkumulators verwirklicht. Der oder die Akkumulatoren können dabei auswechselbar an dem Arbeitsgerät 10 angeordnet sein.

An dem Arbeitsgerät 10 ist ferner noch wenigstens ein Sensormittel 20, wie z. B. ein Temperatursensor zur Überwachung der Geräte- oder Umgebungstemperatur, ein Drucksensor für den Brennstoffdruck, ein Drucksensor für den Umgebungsdruck, ein Beschleunigungssensor, ein Lagesensor, ein Näherungssensor (z. B. zur Erfassung einer Befestigungselement- oder Werkzeuglage), ein Hallsensor (z. B. zur Messung der Geschwindigkeit des Setzkolbens), ein Feuchtigkeitssensor, ein Vibrationsdetektor, ein CCD-Aufnehmer oder ein Mikrofon vorgesehen. Insbesondere bei drehenden Geräten könnten als Sensormittel 20 z. B. auch Drehzahl- oder Drehmomentmesser vorgesehen sein.

Zur Steuerung und Überwachung der Gerätefunktionen des Arbeitsgeräts 10 ist eine insgesamt mit 50 bezeichnete Steuereinheit vorgesehen, die in den Figuren 1 und 2 dargestellt ist. Über eine erste elektrische Leitung 21 ist die Steuereinheit 50 mit der elektrischen Energiequelle 22 verbunden. Zur Steuerung und Überwachung von Gerätefunktionen ist die Steuereinheit 50 ferner über eine zweite elektrische Leitung 25 mit dem Auslöseschalter 16, über eine dritte elektrische Leitung 26 mit dem Ventilatormotor 18, über eine vierte elektrische Leitung 27 mit der Zündeinrichtung 23, über eine fünfte elektrische Leitung 28 mit dem wenigstens einen Sensormittel 20, über eine sechste elektrische Leitung 29 mit der Dosiereinrichtung 24 und über eine siebte elektrische Leitung 35 mit einer nachfolgend noch genauer beschriebenen Baueinheit verbunden die eine Datenübertragungseinrichtung 30 zur kabellosen, netzwerkgestützten, digitalen Datenfernübertragung und eine Positionsermittlungseinrichtung 40 zur globalen Positionsermittlung umfasst.

Die Steuereinheit 50, die Datenübertragungseinrichtung 30, die Positionsermittlungseinrichtung 40 und die Sensormittel 20 gehören dabei zur Geräteelektronik des Arbeitsgeräts 10.

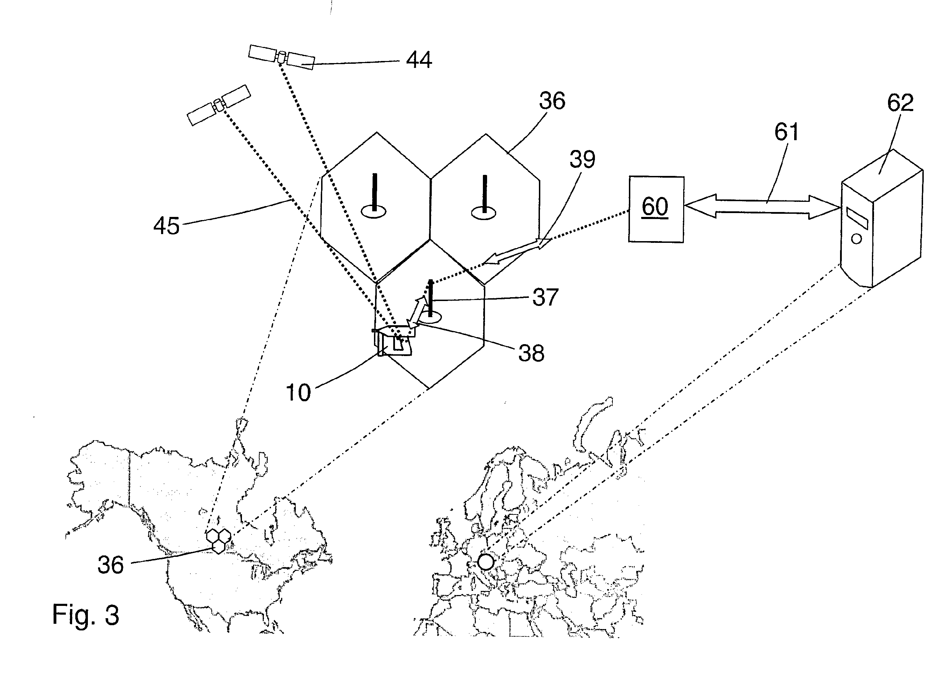

Die Datenübertragungseinrichtung 30 weist eine z. B. als GSM-Modul ausgebildete Funk-Sende- und Empfangseinheit 31 und eine mit dieser über eine achte elektrische Leitung 33 verbundene Funkantenne 32 auf. Unter der Abkürzung GSM wird dabei ein "Globales System für mobile Kommunikation" ("Global System for Mobile Communications") verstanden, wie es z. B. in handelsüblichen Mobiltelefonen zum Einsatz kommt. Über die Datenübertragungseinrichtung 30 können Mess- und Gerätedaten (wie z. B. Betriebszustandsdaten) des Arbeitsgeräts 10 an eine vorzugsweise zentrale Auswertestelle 62 (in Fig. 3 repräsentiert durch einen Personalcomputer) übermittelt werden, was nachfolgend noch genauer beschrieben werden wird.

Die Positionsermittlungseinrichtung 40 weist ein GPS-Modul 41 und eine mit dieser über eine neunte elektrische Leitung 43 verbundene Antenne 42 auf. Unter der Abkürzung GPS wird dabei ein "Globales Positionsbestimmungssystem" ("Global Positioning System") verstanden, wie es z. B. in handelsüblichen Navigationsgeräten zum Einsatz kommt. Über die Positionsermittlungseinrichtung 40 kann der Standort des handgeführten Arbeitsgeräts 10 satellitengestützt ermittelt und bei einer Datenübertragung vom Arbeitsgerät 10 über die Datenübertragungseinrichtung 30 an eine Auswertestelle 62 an diese mit übermittelt werden.

Das GSM-Modul 31 sowie das GPS-Modul 41 sind zu einer GPS-GSM Baueinheit 34 zusammengefasst, die beabstandet zum Antrieb des Arbeitsgeräts 10 in einem Griffbereich 12 des Gehäuses 11 angeordnet ist. Die Funkantenne 32 sowie die Antenne 42 sind dabei in unmittelbarer Nachbarschaft zu einer Gehäusewand 13 im Griffbereich 12 angeordnet, wodurch ein guter Empfang gewährleistet ist.

Die Steuereinheit 50 weist wenigstens einen Mikroprozessor 51 auf, der mit einem vorzugsweise nichtflüchtigen Daten- und Programmspeicher 52 in Verbindung steht. In dem Daten- und Programmspeicher 52 sind zumindest ein Steuerprogramm und Gerätesteuerparameter für das Arbeitsgerät 10 abgelegt und es werden während des Betriebs des Arbeitsgeräts 10 Messdaten der Sensormittel und Gerätedaten dort hinterlegt. Die gespeicherten Mess- und Gerätedaten können dabei bedarfsweise mit Zeitdaten verknüpft werden, die aus einer mit dem Mikroprozessor 51 verknüpften Echtzeituhr 53 stammen. Die Steuereinheit 50 ist ferner über wenigstens eine Schnittstelle 54 mit den anderen elektrischen Bauteilen und Schaltern des Arbeitsgeräts 10 sowie mit der GPS-GSM Baueinheit 34 verbunden, wie vorhergehend bereits beschrieben wurde.

Während des Betriebs des Arbeitsgeräts 10 werden von der Steuereinheit 50, wie bereits erwähnt, Gerätedaten (wie z. B. Identifikationsdaten, Setzkadenz, Setzrate, Zeitstempel, Geräte- und /oder Umgebungstemperatur, Füllstand eines Brennstoffbehälters, Ladezustand einer Stromquelle (z. B. Akku), Brennstoffdosiermengen, Akku-Lastspannung, Akkuleerlaufspannung, Typ des Brennstoffbehälters, Funktionsdaten einer Dosiereinrichtung, Trigger- und oder Schalterbetätigungen, Unterspannungsabschaltungen, Fehlerprotokolle, Funktionsstörungen, Unterspannungsabschaltungen) des Arbeitsgeräts 10 sowie Messdaten der Sensormittel 20 erfasst und ggf. mit von der Echtzeituhr 53 stammenden Zeitdaten verknüpft. Anhand eines in der Steuereinheit 50 ablaufenden Programms wird zu einem vordefinierten Zeitpunkt (z. B. täglich um 0:00 Uhr Ortszeit), in dem sich das Arbeitsgerät vorzugsweise im Ruhezustand befindet, die GPS-GSM Baueinheit 34 aktiviert. Der Mikroprozessor 51 und damit die Steuereinheit 50 werden dabei durch geeignete Triggermittel (Software oder Hardware) aus einem sleep-mode geweckt. Wie aus Fig. 3 ersichtlich empfängt dann zunächst das GPS-Modul 41 über die zugeordnete Antenne 42 die, die momentane geografische Position des Arbeitsgeräts 10 wiedergebenden Koordinaten (gepunktete Linie 45) und die UTC-Zeit (Koordinierte Weltzeit) von Satelliten 44. Diese Positionsdaten und die UTC-Zeit werden von dem GPS-Modul 41 der GPS-GSM Baueinheit 34 über die Leitung 35 an die Steuereinheit 50 weitergegeben, wo sie zusammen mit aus dem Daten- und Programmspeicher ausgelesenen Mess- und Gerätedaten in einem Datenpaket zusammengefasst werden, das nun dem GSM-Modul 31 der GPS-GSM Baueinheit 34 über die Leitung 35 übermittelt wird. Vom GSM-Modul 31 werden diese Daten z. B. in Form wenigstens einer SMS (short message service) über die Antenne 32 in das GSM-Netzwerk bzw. das Mobilfunknetz (in Figur 3 dargestellt durch die Waben 36 des Funknetzwerks) abgestrahlt (Pfeil 38 in Fig. 3). Die Nachricht wird dann von wenigstens einer Netzwerkantenne 37 des Mobilfunknetzes empfangen und innerhalb des Mobilfunknetzes übermittelt (Pfeil 39 in Fig. 3). Vom Mobilfunknetz erfolgt eine Übergabe der Daten ins Internet (Bezugszeichen 60) und im Internet eine Übermittlung an einen Personalcomputer der Auswertestelle 62. Auf einem umgekehrten Übermittlungsweg können auch Gerätesteuerparameter, Änderungen des Betriebsprogramms oder neue Programme von der Auswertestelle 62 an die Steuereinheit des Arbeitsgeräts 10 über das Mobilfunknetz übermittelt werden. Alternativ kann auch eine direkte Datenübermittlung per Mobilfunkverbindung über das Mobilfunknetz zwischen dem Arbeitsgerät 10 und der Auswertestelle erfolgen.

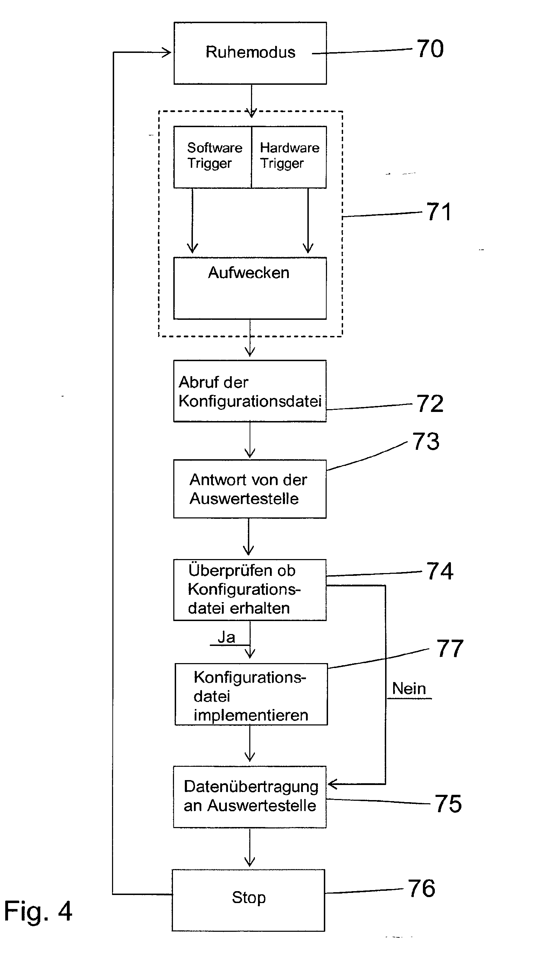

Ein Verfahren zur (ferngesteuerten) Konfiguration der Geräteelektronik wird nachfolgend anhand von Fig. 4 erläutert. Dabei wird in einem ersten Schritt 71 wenigstens die Steuereinheit 50 und die Datenübertragungseinrichtung 30 der Geräteelektronik zu einem in einem Steuerprogramm als Zeitparameter hinterlegten Zeitpunkt aus einem Ruhemodus 70 geweckt und aktiviert (Software Trigger in Fig. 4). Alternativ kann das Wecken auch über einen Hardware Trigger erfolgen. Dazu kann z. B. ein Tastschalter vorgesehen sein, der bei Betätigung ein Signal an die Steuereinheit 50 sendet.

In einem nachfolgenden zweiten Schritt 72 tritt die Datenübertragungseinrichtung 30 in eine drahtlose, digitale Datenkommunikation mit einem Mobilfunknetz ein und ruft über das Mobilfunknetz eine von der Auswertestelle 62 bereitgestellte Konfigurationsdatei ab.

In einem nachfolgenden dritten Schritt 73 empfängt die Datenübertragungseinrichtung 30 über das Mobilfunknetz eine Antwort, die eine neue Konfigurationsdatei enthalten kann.

In einem nachfolgenden vierten Schritt 74 überprüft die Datenübertragungseinrichtung 30 und/oder die Steuereinheit 50 ob eine Konfigurationsdatei empfangen wurde. In dem Fall, dass eine Konfigurationsdatei empfangen wurde, werden die in der Konfigurationsdatei enthaltenen Parameter, wie z. B. der Zeitparameter zum Wecken der Steuereinheit und der Datenübertragungseinrichtung 30 in das Steuerprogramm für die Geräteelektronik implementiert 77.

In einem fünften Schritt 75 nimmt die Datenübertragungseinrichtung 30 eine Datenübertragung wenigstens von Messdaten aus der Steuereinheit 50 über das Mobilfunknetz an die Auswertestelle 62 vor.

In einem weiteren Schritt 76 werden die Datenübertragungseinrichtung 30 und die Steuereinheit 50 dann wieder in den Ruhemodus 70 überführt.

Wie bereits vorhergehend beschrieben kann die Datenübertragung zwischen der Auswertestelle 62 und der Datenübertragungseinrichtung 30 dabei indirekt über SMS oder direkt über eine vom Mobilfunknetz vermittelte Verbindung zwischen der Datenübertragungseinrichtung 30 und der Auswertestelle 62 erfolgen.

## Patentansprüche

1. Verfahren zur Konfiguration einer Geräteelektronik eines handgeführten Arbeitsgeräts (10), die Sensormittel (20) zur Erfassung von Messdaten, eine Steuereinheit (50) zur Messdatenverarbeitung und zur Steuerung von Gerätefunktionen und eine Datenübertragungseinrichtung (30) aufweist,
wobei eine Datenübertragung zwischen der Datenübertragungseinrichtung (30) und einer Auswertestelle (62) über ein Mobilfunknetz erfolgt, wobei
- in einem ersten Schritt (71) wenigstens die Steuereinheit (50) und die Datenübertragungseinrichtung (30) der Geräteelektronik zu einem in einem Steuerprogramm als Zeitparameter hinterlegten Zeitpunkt aus einem Ruhemodus (70) geweckt und aktiviert werden,
- die Datenübertragungseinrichtung (30) in einem nachfolgenden zweiten Schritt (72)
in eine drahtlose, digitale Datenkommunikation mit dem Mobilfunknetz tritt und über das Mobilfunknetz eine von der Auswertestelle (62) bereitgestellte Konfigurationsdatei abruft,
- die Datenübertragungseinrichtung (30) in einem nachfolgenden dritten Schritt (73) über das Mobilfunknetz eine Antwort empfängt, die eine neue Konfigurationsdatei enthalten kann,
- die Datenübertragungseinrichtung (30) und/oder die Steuereinheit (50) in einem nachfolgenden vierten Schritt (74) überprüft ob eine Konfigurationsdatei empfangen wurde und die in dem Fall, dass eine Konfigurationsdatei empfangen wurde, in der Konfigurationsdatei enthaltene Parameter in das Steuerprogramm für die Geräteelektronik implementiert (77)
- und die Datenübertragungseinrichtung (30) und die Steuereinheit (50) in einem weiteren Schritt (76) wieder in den Ruhemodus (70) überführt werden.

2. Verfahren nach Anspruch 1, **dadurch gekennzeichnet, dass** die Datenübertragung zwischen der Auswertestelle (62) und der Datenübertragungseinrichtung (30) indirekt über SMS erfolgt.

3. Verfahren nach Anspruch 1, **dadurch gekennzeichnet, dass** die Datenübertragung zwischen der Auswertestelle (62) und der Datenübertragungseinrichtung (30) direkt über eine vom Mobilfunknetz vermittelte Verbindung zwischen der Datenübertragungseinrichtung (30) und der Auswertestelle (62) erfolgt.

4. Verfahren nach Anspruch 1, **dadurch gekennzeichnet, dass** die Datenübertragungseinrichtung (30) in einem fünften Schritt (75), der zwischen dem vierten Schritt (74) und dem weiteren Schritt (76) liegt, eine Datenübertragung wenigstens von Messdaten aus der Steuereinheit (50) über das Mobilfunknetz an die Auswertestelle (62) vornimmt.

5. Verfahren nach einem der Ansprüche 1 bis 4, **dadurch gekennzeichnet, dass** neben den Parametern noch Steuerprogramme und/oder Steuerprogrammteile mit der Konfigurationsdatei von der Auswertestelle (62) an die Datenübertragungseinrichtung (30) übermittelt werden.

6. Verfahren nach Anspruch 1, **dadurch gekennzeichnet, dass** neben der Datenübertragungseinrichtung (30) eine Positionsermittlungseinrichtung (40) zur globalen Positionsermittlung vorgesehen ist, wobei die von der Positionsermittlungseinrichtung (40) ermittelten Positionsdaten von der Datenübertragungseinrichtung (30) bei der Datenübertragung an die Auswertestelle (62) mit übermittelt werden.

## Claims

1. Method for configuring appliance electronics of a hand-guided appliance (10) which has sensor means (20) for acquiring measurement data, a control unit (50) for processing measurement data and for controlling appliance functions, and a data transmission device (30),
where data are transmitted between the data transmission device (30) and an evaluation unit (62) via a mobile radio network, wherein
in a first step (71) at least the control unit (50) and the data transmission device (30) of the appliance electronics are awakened from a non-operative mode (70) and activated at a point in time filed in a control programme as a time parameter,
in an ensuing second step (72) the data transmission device (30) enters into wireless digital data communication with the mobile radio network and retrieves via the mobile radio network a configuration data file provided by the evaluation unit (62),
in an ensuing third step (73) the data transmission device (30) receives via the mobile radio network a reply which may contain a new configuration data file,
in an ensuing fourth step (74) the data transmission device (30) and/or control unit (50) verifies that a configuration data file has been received and, if so, incorporates (77) the parameters contained in the configuration data file into the control programme for the appliance electronics,
and in a further step (76) the data transmission device (30) and control unit (50) are restored to the non-operative mode (70).

2. Method according to Claim 1, **characterized in that** the data transmission between the evaluation unit (62) and the data transmission device (30) is effected indirectly via SMS.

3. Method according to Claim 1, **characterized in that** the data transmission between the evaluation unit (62) and the data transmission device (30) is effected directly via a link provided by the mobile radio network between the data transmission device (30) and the evaluation unit (62).

4. Method according to Claim 1, **characterized in that** in a fifth step (75) which comes between the fourth step (74) and the further step (76), the data transmission device (30) performs a data transmission of at least measurement data from the control unit (50) via the mobile radio network to the evaluation unit (62).

5. Method according to any one of Claims 1 to 4, **characterized in that**, in addition to the parameters, control programmes and/or parts of control programmes are transmitted with the configuration data file from the evaluation unit (62) to the data transmission device (30).

6. Method according to Claim 1, **characterized in that**, in addition to the data transmission device (30), a position detection device (40) for global positioning is provided, the positional data detected by the position detection device (40) being transmitted together with the data transmitted by the data transmission device (30) to the evaluation unit (62).

## Revendications

1. Procédé de configuration d'une électronique d'appareil d'un outil à main (10) qui présente des moyens capteurs (20) pour la saisie de données de mesure, une unité de mesure (50) pour le traitement des données de mesure et pour la commande de fonctions de l'appareil et un équipement de transmission de données (30),
une transmission de données ayant lieu entre l'équipement de transmission de données (30) et un poste d'évaluation (62) par l'intermédiaire d'un réseau cellulaire mobile, où
- dans une première étape, au moins l'unité de commande (50) et l'équipement de transmission de données (30) de l'électronique de l'appareil sont mis en marche et activés à un moment, consigné sous forme d'un paramètre temps dans un programme de commande, à partir d'un mode repos,
- l'équipement de transmission de données (30) entre en communication de données digitales, sans fil, dans une deuxième étape subséquente avec un réseau cellulaire mobile et met en oeuvre une donnée de configuration préparée à partir du poste d'évaluation (62),
- dans une troisième étape (73) subséquente, l'équipement de transmission de données (30) reçoit une réponse, qui peut contenir une nouvelle donnée de configuration, par l'intermédiaire du réseau cellulaire mobile,
- l'équipement de transmission de données (30) et/ou l'unité de commande (50) examine(nt) dans une quatrième étape subséquente si une donnée de configuration a été reçue, et, lorsqu'une donnée de configuration a été reçue, implante (77) le paramètre obtenu dans la donnée de configuration dans le programme de commande pour l'électronique de l'appareil,
- et l'équipement de transmission de données (30) et l'unité de commande (50) retournent de nouveau au mode repos (70) dans une étape ultérieure (76).

2. Procédé selon la revendication 1, **caractérisé en ce que** la transmission des données s'effectue indirectement par SMS entre le poste d'évaluation (62) et l'équipement de transmission de données (30).

3. Procédé selon la revendication 1, **caractérisé en ce que** la transmission des données s'effectue directement entre le poste d'évaluation (62) et l'équipement de transmission de données (30) par l'intermédiaire d'une liaison fournie par le réseau cellulaire mobile entre l'équipement de transmission de données (30) et le poste d'évaluation (62).

4. Procédé selon la revendication 1, **caractérisé en ce que** l'équipement de transmission de données (30) réalise une transmission de données pour au moins des données de mesure à partir de l'unité de commande (50) vers le poste d'évaluation (62) par l'intermédiaire du réseau cellulaire mobile dans une cinquième étape (75), qui se situe entre la quatrième étape (74) et l'étape ultérieure (76).

5. Procédé selon l'une des revendications 1 à 4, **caractérisé en ce qu'**à côté des paramètres, des programmes de commande et/ou des parties de programmes de commande sont transmis avec la donnée de configuration du poste d'évaluation (62) vers l'équipement de transmission de données (30).

6. Procédé selon la revendication 1, **caractérisé en ce qu'**à côté de l'équipement de transmission de données (30), un équipement de détermination des positions (40) est prévu pour l'évaluation globale des positions, les données de position évaluées par l'équipement d'évaluation des positions (40) étant également transmises lors de la transmission des données à partir du poste d'évaluation (62).
